# EUROPEAN PATENT APPLICATION

(11) **EP 4 340 090 A1**
(43) Date of publication of application: **20.03.2024**
(21) Application number: 22807231.0
(22) Date of filing: 25.03.2022
(51) Int. Cl.: H01M 10/0562, H01M 10/0585, H01M 50/531

(54) **BATTERY AND METHOD FOR PRODUCING BATTERY**

(30) Priority: 10.05.2021 JP 2021080035
(71) Applicant: Panasonic Intellectual Property Management Co., Ltd., Kadoma-shi, Osaka 571-0057 (JP)
(72) Inventor: HONDA, Kazuyoshi, Chuo-ku, Tokyo 103-0022 (JP); KOGA, Eiichi, Chuo-ku, Tokyo 103-0022 (JP); HIRANO, Koichi, Chuo-ku, Tokyo 103-0022 (JP); KAWASE, Akira, Chuo-ku, Tokyo 103-0022 (JP)
(74) Representative: Eisenführ Speiser
(86) International application number: PCT/JP2022/014292
(87) International publication number: WO 2022/239526

(57) **Abstract**

A battery (1) includes: a power generation element (10) including battery cells (100) which are electrically connected in parallel and stacked, and each of which includes an electrode layer (110), a counter-electrode layer (120), and a solid electrolyte layer (130) located between the electrode layer (110) and the counter-electrode layer (120); an electrode insulating layer (21) covering an electrode layer among the electrode layers (110) at a side surface (11) of the power generation element (10); and a counter-electrode terminal (31) covering the side surface (11) and the electrode insulating layer (21), and electrically connected to a counter-electrode layer among the counter-electrode layers (120).

## Description

### [Technical Field]

The present disclosure relates to a battery and a method of manufacturing a battery.

### [Background Art]

In recent years, a battery formed by connecting multiple series-connected battery cells in parallel has been known (for example, see Patent Literature (PTL) 1 and PTL 2).

### [Citation List]

### [Patent Literature]

[PTL 1] Japanese Unexamined Patent Application Publication No. 2013-120717
[PTL 2] Japanese Unexamined Patent Application Publication No. 2008-198492

### [Summary of Invention]

### [Technical Problem]

There is a demand for the further improvement of the battery property of the conventional battery.

In view of this, the present disclosure provides a high-performance battery and a method of manufacturing the battery.

### [Solution to Problem]

A battery according to one aspect of the present disclosure includes: a power generation element including a plurality of battery cells which are electrically connected in parallel and stacked, and each of which includes an electrode layer, a counter-electrode layer, and a solid electrolyte layer located between the electrode layer and the counter-electrode layer; a first insulating member covering an electrode layer among the electrode layers at a first side surface of the power generation element; and a first terminal electrode covering the first side surface and the first insulating member, and electrically connected to a counter-electrode layer among the counter-electrode layers.

A method of manufacturing a battery according to one aspect of the present disclosure includes: (i) preparing a plurality of battery cells each of which includes an electrode layer, a counter-electrode layer, and a solid electrolyte layer located between the electrode layer and the counter-electrode layer; (ii) forming a layered body of the plurality of battery cells stacked in turn so that an order of arrangement of the electrode layer, the counter-electrode layer, and the solid electrolyte layer is alternately reversed; (iii) covering an electrode layer among the electrode layers with an insulating member at one side surface of the layered body; and (iv) covering the one side surface and the insulating member with a terminal electrode electrically connected to a counter-electrode layer among the counter-electrode layers.

### [Advantageous Effects of Invention]

According to the present disclosure, it is possible to provide a high-performance battery and a method of manufacturing the battery.

### [Brief Description of Drawings]

[FIG. 1]

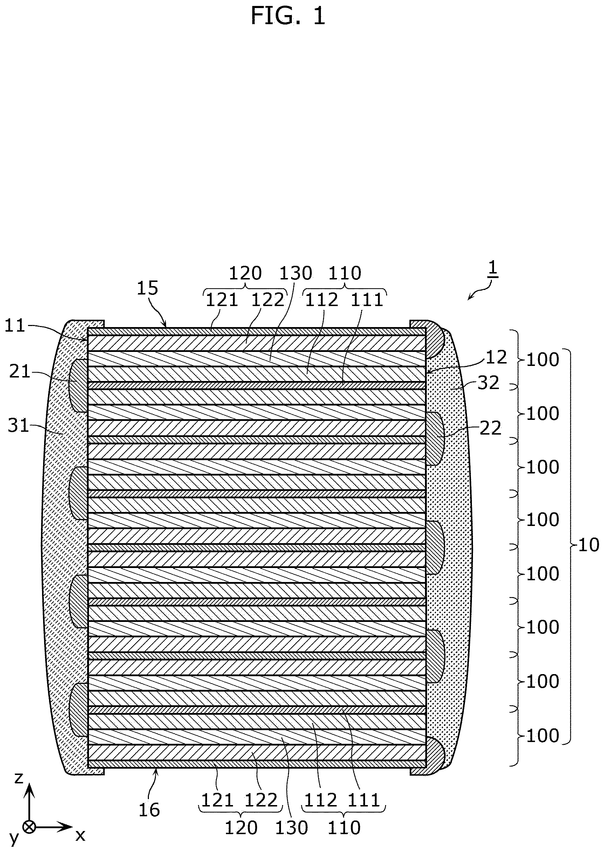

   FIG. 1 is a cross-sectional view illustrating a cross-sectional configuration of a battery according to Embodiment 1.
[FIG. 2]

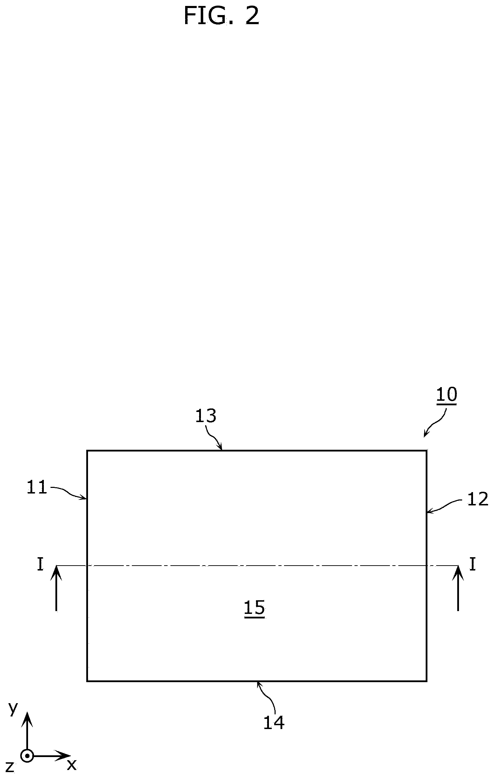

   FIG. 2 is a top view of a power generation element of the battery according to Embodiment 1.
[FIG. 3A]

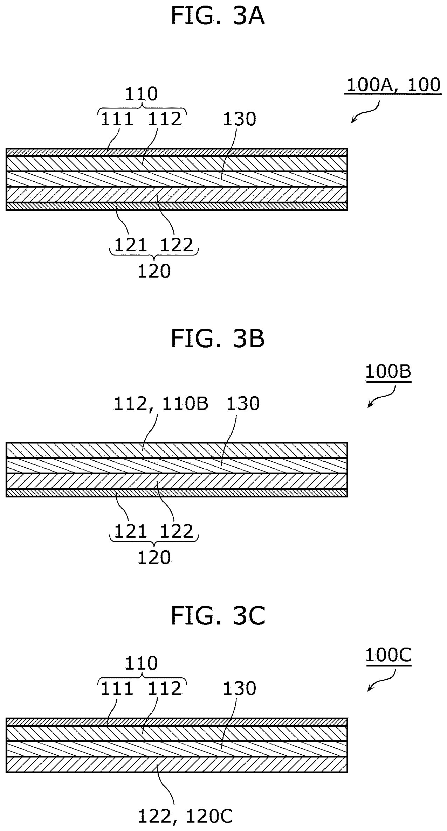

   FIG. 3A is a cross-sectional view of an example of a battery cell included in the power generation element according to Embodiment 1.
[FIG. 3B]
   FIG. 3B is a cross-sectional view of another example of the battery cell included in the power generation element according to Embodiment 1.
[FIG. 3C]
   FIG. 3C is a cross-sectional view of another example of the battery cell included in the power generation element according to Embodiment 1.
[FIG. 4]

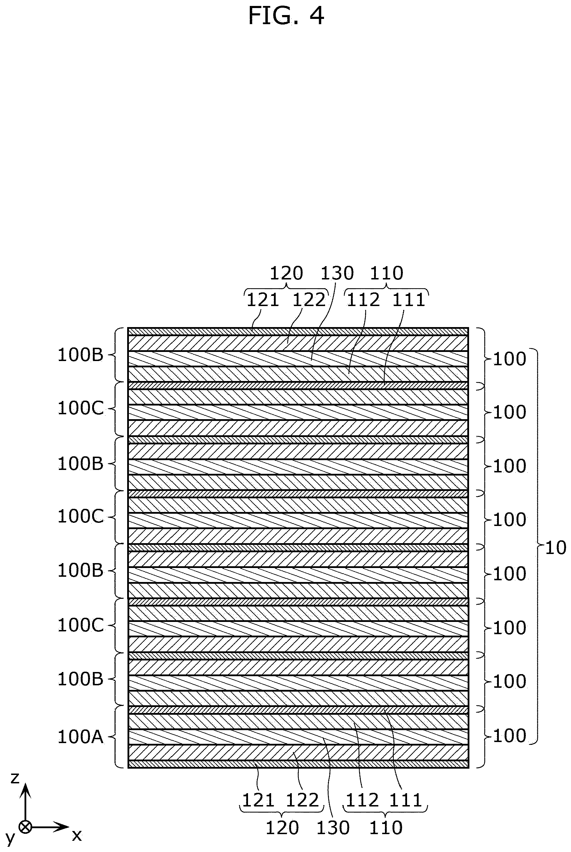

   FIG. 4 is a cross-sectional view of the power generation element according to Embodiment 1.
[FIG. 5]

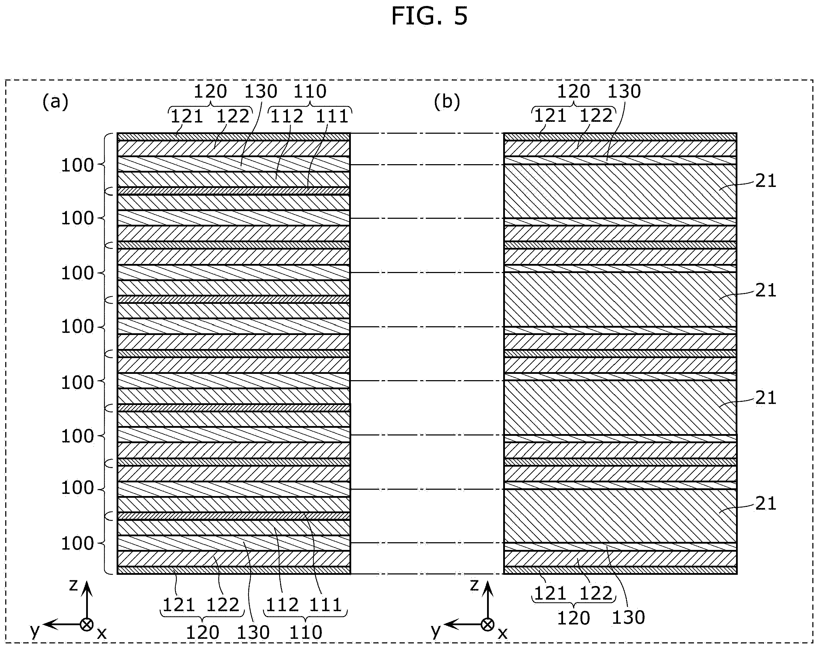

   FIG. 5 is a side view illustrating a positional relationship between the first side surface of the power generation element and an electrode insulating layer formed on the first side surface, according to Embodiment 1.
[FIG. 6]

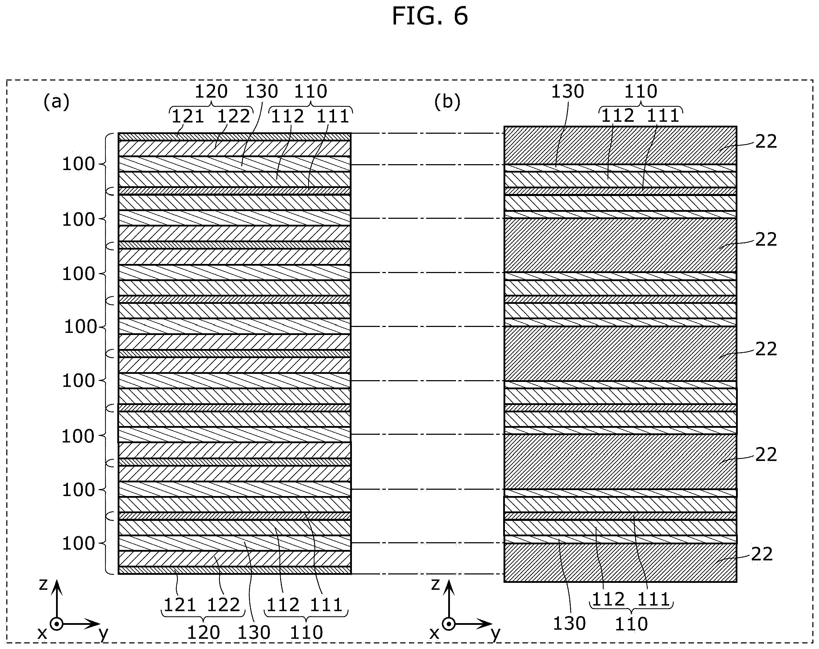

   FIG. 6 is a side view illustrating a positional relationship between the second side surface of the power generation element and a counter-electrode insulating layer formed on the second side surface, according to Embodiment 1.
[FIG. 7]

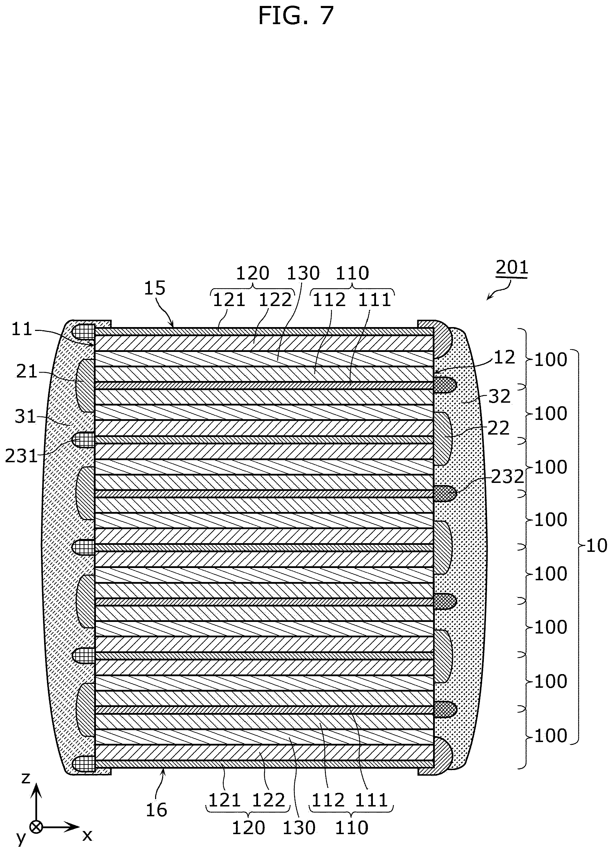

   FIG. 7 is a cross-sectional view illustrating a cross-sectional configuration of a battery according to Embodiment 2.
[FIG. 8]

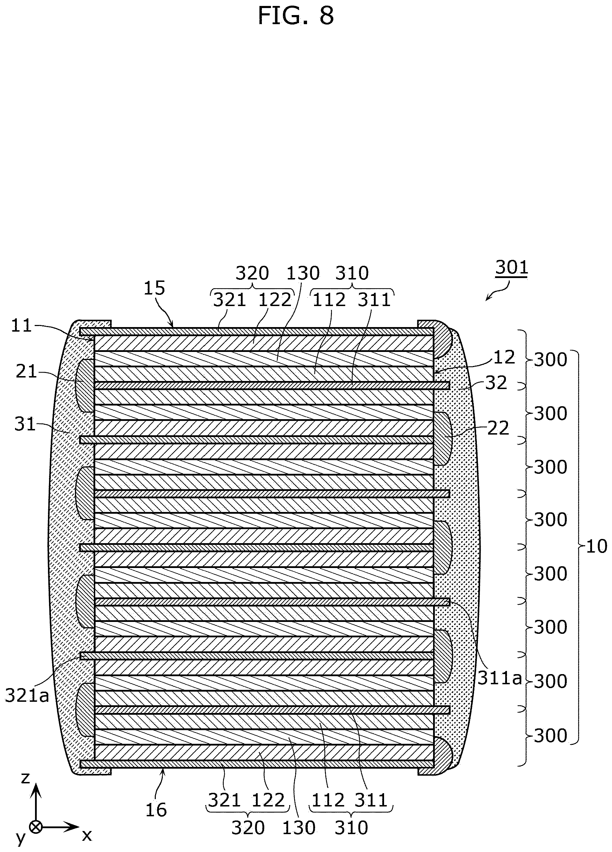

   FIG. 8 is a cross-sectional view illustrating a cross-sectional configuration of a battery according to Embodiment 3.
[FIG. 9]

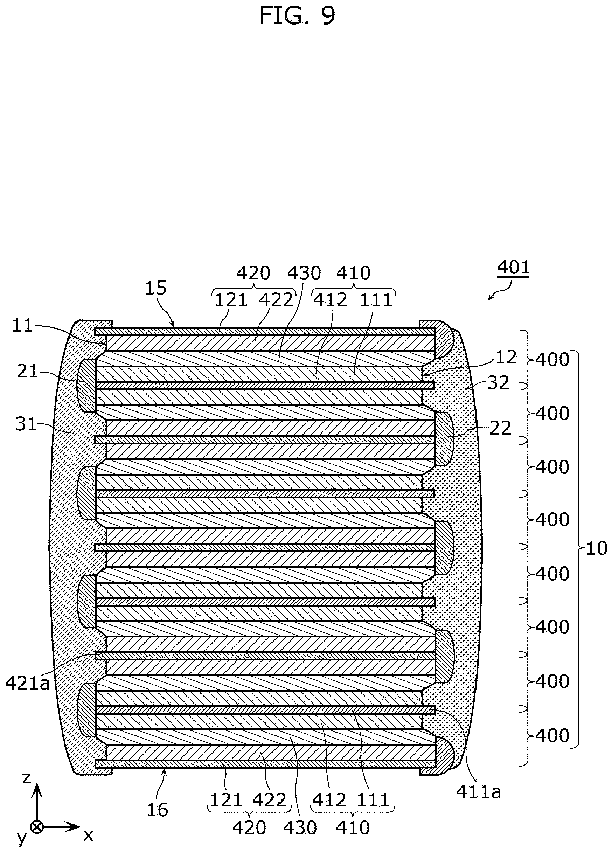

   FIG. 9 is a cross-sectional view illustrating a cross-sectional configuration of a battery according to Embodiment 4.
[FIG. 10]

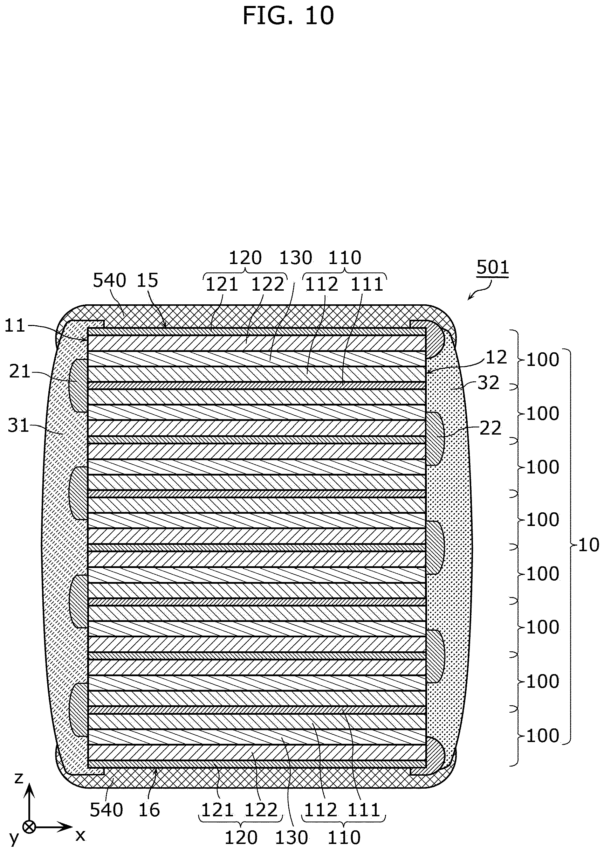

   FIG. 10 is a cross-sectional view illustrating a cross-sectional configuration of a battery according to Embodiment 5.
[FIG. 11]

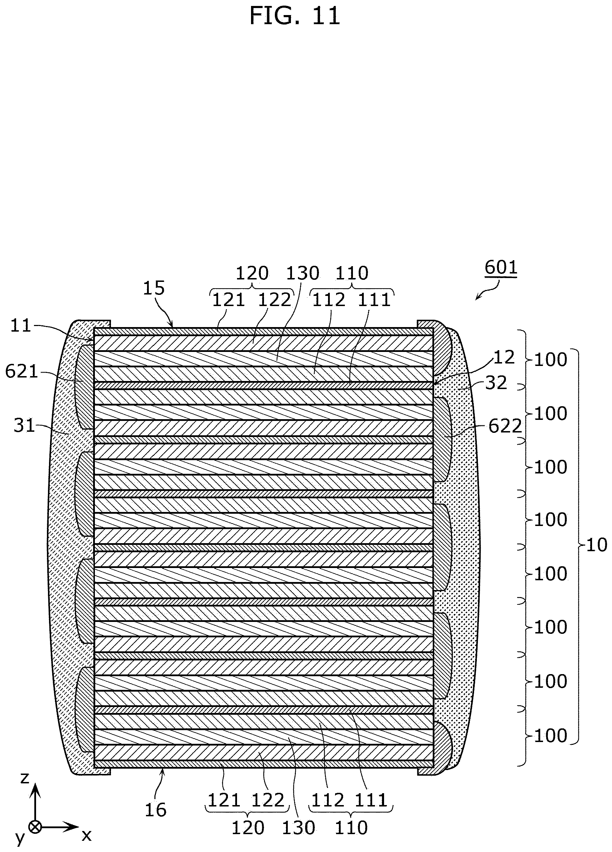

   FIG. 11 is a cross-sectional view illustrating a cross-sectional configuration of a battery according to Variation 1.
[FIG. 12]

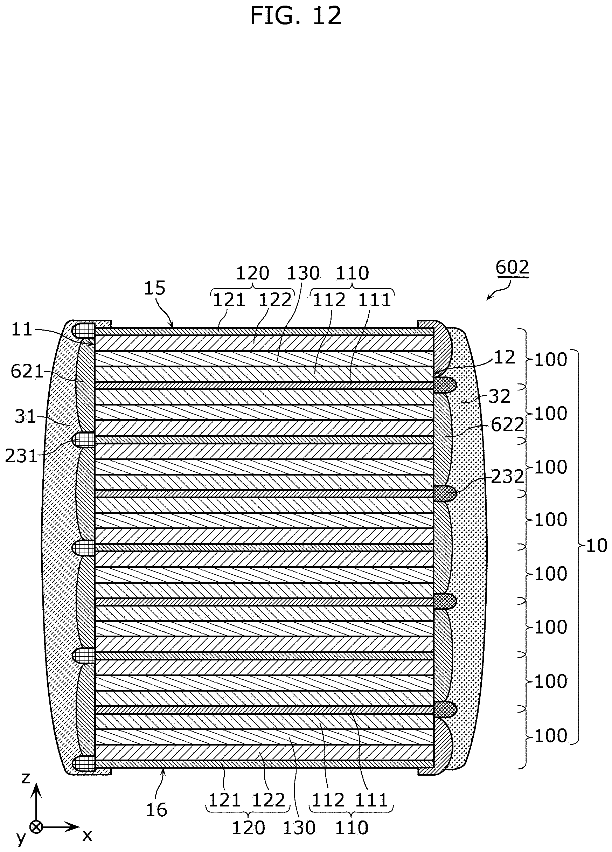

   FIG. 12 is a cross-sectional view illustrating a cross-sectional configuration of a battery according to Variation 2.
[FIG. 13]

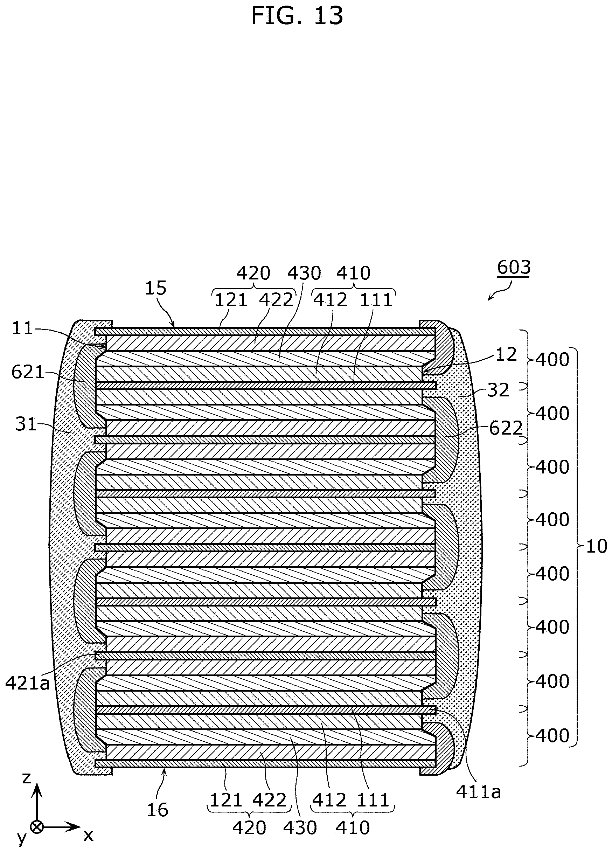

   FIG. 13 is a cross-sectional view illustrating a cross-sectional configuration of a battery according to Variation 3.
[FIG. 14]

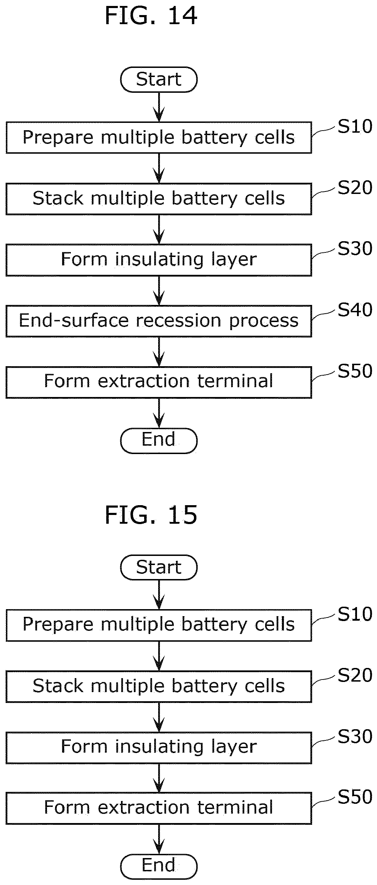

   FIG. 14 is a flowchart illustrating an example of a method of manufacturing the battery according to each embodiment or each variation.
[FIG. 15]
   FIG. 15 is a flowchart illustrating another example of the method of manufacturing the battery according to each embodiment or each variation.

### [Description of Embodiments]

### (Outline of Present Disclosure)

A battery according to one aspect of the present disclosure includes: a power generation element including a plurality of battery cells which are electrically connected in parallel and stacked, and each of which includes an electrode layer, a counter-electrode layer, and a solid electrolyte layer located between the electrode layer and the counter-electrode layer; a first insulating member covering an electrode layer among the electrode layers at a first side surface of the power generation element; and a first terminal electrode covering the first side surface and the first insulating member, and electrically connected to a counter-electrode layer among the counter-electrode layers.

With this, it is possible to achieve a high-performance battery. For example, the first insulating member covers the electrode layer at the first side surface, and thus it is possible to prevent a short circuit between the counter-electrode layer and the electrode layer through the first terminal electrode. Moreover, for example, all the battery cells are electrically connected in parallel. This can prevent overcharging or over-discharging of a specific battery cell due to the capacity difference of the battery cells. As described above, the reliability of the battery can be enhanced, and thus it is possible to achieve a high-performance battery.

Moreover, for example, the counter-electrode layer includes: a counter-electrode current collector; and a counter-electrode active material layer located between the counter-electrode current collector and the solid electrolyte layer, at the first side surface, the counter-electrode current collector protrudes relative to the counter-electrode active material layer, and the first terminal electrode may be in contact with a main surface of the counter-electrode current collector.

With this, at the protrusion of the counter-electrode current collector, the first terminal electrode is in contact with the main surface as well as the end surface of the counter-electrode current collector, and thus the contact area between the first terminal electrode and the counter-electrode current collector is increased. Accordingly, the connection resistance between the first terminal electrode and the counter-electrode current collector is decreased, and thus it is possible to improve the high current characteristics. For example, rapid charge of the battery becomes possible.

Moreover, for example, at the first side surface, the counter-electrode active material layer may be recessed relative to the electrode layer.

With this, the contact area between the first terminal electrode and the counter-electrode current collector is further increased, and thus the connection resistance between the first terminal electrode and the counter-electrode current collector is further decreased.

Moreover, for example, an end surface of the counter-electrode current collector on the first side surface side and an end surface of the electrode layer on the first side surface side may be aligned when viewed from a direction orthogonal to a main surface of the power generation element.

With this, for example, the power generation element can be easily formed by collectively cutting the stacked battery cells. The use of the collectively cutting prevents, for example, gradual increase or gradual decrease in film thickness at the beginning and ending edges of coating, and thus the area of the electrode layer, the area of the counter-electrode layer, and the area of the solid electrolyte layer are determined accurately. Accordingly, the capacity difference of the battery cells is reduced, and thus it is possible to achieve an accurate battery capacity.

Moreover, for example, a thickness of the counter-electrode current collector may be less than or equal to 20 µm.

With this, it is possible to achieve improvement of energy density, improvement of output density, reduction in material cost, and the like.

Moreover, for example, at the first side surface, the first insulating member may cover at least a part of a solid electrolyte layer among the solid electrolyte layers.

With this, the first insulating member is formed to cover to a part of the solid electrolyte layer, and thus it is possible to prevent the electrode layer from being exposed without being covered with the first insulating member even when there is variation in size of the first insulating member. Moreover, in general, the solid electrolyte layer includes a powder-like material, and thus the end surface of the solid electrolyte layer has very fine unevenness. This improves the adhesion strength of the first insulating member and enhances the reliability of insulation. As described above, it is possible to further enhance the reliability of the battery.

Moreover, for example, at the first side surface, the first insulating member may cover from an electrode layer among the electrode layers to a part of a corresponding one of the counter-electrode layers along a stacking direction of the power generation element.

With this, the first insulating member covers to a part of the counter-electrode layer, and thus it is possible to sufficiently prevent the electrode layer from being exposed without being covered with the first insulating member. Moreover, in general, the counter-electrode active material layer also includes a powder-like material, and thus the end surface of the counter-electrode active material layer has very fine unevenness. This further improves the adhesion strength of the first insulating member and enhances the reliability of insulation. Accordingly, it is possible to further enhance the reliability of the battery.

Moreover, for example, the battery according to one aspect of the present disclosure may further include a conductive member covering at least a part of a counter-electrode layer among the counter-electrode layers at the first side surface, in which the first terminal electrode may further cover the conductive member.

With this, it is possible to use different property material for the conductive member and the first terminal electrode. For example, for the material of the conductive member, it is possible to select a material with a focus on high conductivity, alloying with a metal in the current collector, and the like. For the material of the first terminal electrode, it is possible to select a material with a focus on flexibility, impact resistance, chemical stability, cost, ease of spreading in implementation, and the like. As described above, a material suitable for each element can be selected, and thus it is possible to improve the performance of the battery and facilitate manufacturing the battery.

Moreover, for example, at the first side surface, the first insulating member covers the electrode layer of each of the plurality of battery cells, and the first terminal electrode may be electrically connected to the counter-electrode layer of each of the plurality of battery cells.

With this, the first terminal electrode can be used to connect the battery cells in parallel. The first terminal electrode can be in close contact with the first side surface and the first insulating member, and thus the volume of a portion related to the parallel connection can be reduced. Accordingly, it is possible to increase the energy density of the battery.

Moreover, for example, in plan view of the first side surface, the first insulating member may have a stripe shape.

With this, the end surfaces of the electrode layers exposed on the first side surface in the shape of stripes can be covered by the stripe-shaped first insulating member.

Moreover, for example, the battery according to one aspect of the present disclosure may further include: a second insulating member covering a counter-electrode layer among the counter-electrode layers at a second side surface of the power generation element; and a second terminal electrode covering the second side surface and the second insulating member, and electrically connected to an electrode layer among the electrode layers.

With this, it is possible to achieve a higher performance battery. More specifically, the second insulating member covers the counter-electrode layer at the second side surface, and thus it is possible to prevent a short circuit between the electrode layer and the counter-electrode layer through the second terminal electrode. As described above, the reliability of the battery can be enhanced, and thus it is possible to achieve a high-performance battery.

Moreover, for example, the electrode layer includes: an electrode current collector; and an electrode active material layer located between the electrode current collector and the solid electrolyte layer, at the second side surface, the electrode current collector protrudes relative to the electrode active material layer, and the second terminal electrode may be in contact with a main surface of the electrode current collector.

With this, at the protrusion of the electrode current collector, the second terminal electrode is in contact with the main surface as well as the end surface of the electrode current collector, and thus the contact area between the second terminal electrode and the electrode current collector is increased. Accordingly, the connection resistance between the second terminal electrode and the electrode current collector is decreased, and thus it is possible to improve the high current characteristics. For example, rapid charge of the battery becomes possible.

Moreover, for example, at the second side surface, the electrode active material layer may be recessed relative to the counter-electrode layer.

With this, the contact area between the second terminal electrode and the electrode current collector is further increased, and thus the connection resistance between the second terminal electrode and the electrode current collector is further decreased.

Moreover, for example, a thickness of the electrode current collector is less than or equal to 20 µm.

With this, it is possible to achieve improvement of energy density, improvement of output density, reduction in material cost, and the like.

Moreover, for example, at the second side surface, the second insulating member covers the counter-electrode layer of each of the plurality of battery cells, and the second terminal electrode may be electrically connected to the electrode layer of each of the plurality of battery cells.

With this, the second terminal electrode can be used to connect the battery cells in parallel. The second terminal electrode can be in close contact with the second side surface and the second insulating member, and thus the volume of a portion related to the parallel connection can be reduced. Accordingly, it is possible to increase the energy density of the battery.

Moreover, for example, the first insulating member may include a resin.

With this, it is possible to enhance the impact resistance of the battery. Moreover, it is possible to ease the stress exerted on the battery due to a temperature change of the battery or expansion and contraction of the battery in charging and discharging.

Moreover, for example, the battery according to one aspect of the present disclosure may further include a sealing member that does not cover at least a part of the first terminal electrode, and seals the power generation element.

With this, the power generation element can be protected against outside air, water, and the like, and thus it is possible to further enhance the reliability of the battery.

A method of manufacturing a battery according to one aspect of the present disclosure includes: (i) preparing a plurality of battery cells each of which includes an electrode layer, a counter-electrode layer, and a solid electrolyte layer located between the electrode layer and the counter-electrode layer; (ii) forming a layered body of the plurality of battery cells stacked in turn so that an order of arrangement of the electrode layer, the counter-electrode layer, and the solid electrolyte layer is alternately reversed; (iii) covering an electrode layer among the electrode layers with an insulating member at one side surface of the layered body; and (iv) covering the one side surface and the insulating member with a terminal electrode electrically connected to a counter-electrode layer among the counter-electrode layers.

In this manner, it is possible to manufacture the high-performance battery described above.

Moreover, for example, the method of manufacturing the battery according to one aspect of the present disclosure may further include: (v) protruding, at the one side surface, a part of the counter-electrode layer relative to a remaining part of the counter-electrode layer.

In this manner, the contact area between the terminal electrode and counter-electrode layer is increased, and thus the connection resistance between the terminal electrode and counter-electrode layer is decreased. Accordingly, it is possible to improve the high current characteristics of the battery.

Moreover, for example, (v) may be performed after (iii) and before (iv).

In this manner, the insulating member formed in step (iii) can serve as the protective member in step (v).

Moreover, for example, (v) may be implemented by partial cutting, polishing, sandblasting, brushing, etching, or plasma irradiation performed on the one side surface.

In this manner, for example, the insulating member serves as a protective member against the sandblasting, plasma irradiation, or the like, and thus it is possible to protrude a part covered with the insulating member relative to a part not covered with the insulating member by recessing the part not covered with the insulating member. Moreover, for example, it is possible to easily protrude the current collector relative to the active material layer by utilizing a difference in strength between the current collector and the active material layer.

Embodiments are described in details below with reference to drawings.

Each of the embodiments described below shows a general or specific example. Numerical values, shapes, materials, constituent elements, the arrangement and connection of the constituent elements, steps, the order of the steps, and the like shown in the following embodiments are examples, and are not intended to limit the present disclosure. Among the constituent elements in the following embodiments, constituent elements which are not recited in the independent claims are described as optional constituent elements.

The drawings are schematic views and are not exactly shown. Hence, for example, scales and the like are not necessarily the same in the drawings. In the drawings, substantially the same components are identified with the same reference signs, and repeated descriptions are omitted or simplified.

In the present specification, terms such as parallel and orthogonal which indicate relationships between elements, terms such as rectangular and cuboid which indicate the shapes of elements, and numerical ranges are expressions which not only indicate exact meanings but also indicate substantially equivalent ranges such as a range including a several percent difference.

In the present specification and the drawings, an x-axis, a y-axis, and a z-axis indicate three axes of a three-dimensional orthogonal coordinate system. When the shape of the power generation element of a battery in plan view is a rectangle, the x-axis and the y-axis correspond a direction parallel to a first side of the rectangle and a direction parallel to a second side orthogonal to the first side, respectively. The z-axis corresponds to the stacking direction of a plurality of battery cells included in the power generation element.

In the present specification, the "stacking direction" coincides with a direction normal to the main surfaces of a current collector and an active material layer. In the present specification, the "plan view" is a view when viewed in a direction perpendicular to the main surface of the power generation element, excluding a specified case such as single application. Note that, the "plan view of a surface" such as the "plan view of the first side surface" is a view when the "surface" is viewed from the front.

In the present specification, terms of "upward" and "downward" do not indicate an upward direction (vertically upward) and a downward direction (vertically downward) in absolute spatial recognition but are used as terms for defining a relative positional relationship based on a stacking order in a stacking configuration. The terms of "upward" and "downward" are applied not only to a case where two constituent elements are spaced with another constituent element present between the two constituent elements but also to a case where two constituent elements are arranged in close contact with each other to be in contact with each other. In the following description, the negative side of the z-axis is assumed to be "downward" or a "downward side", and the positive side of the z-axis is assumed to be "upward" or an "upward side".

In the present specification, unless otherwise specified, ordinal numbers such as "first" and "second" do not mean the number or order of constituent elements but are used to avoid confusion of similar constituent elements and to distinguish between them.

### [Embodiment 1]

The following describes the configuration of a battery according to Embodiment 1.

FIG. 1 is a cross-sectional view illustrating a cross-sectional configuration of battery 1 according to Embodiment 1. As shown in FIG. 1, battery 1 includes power generation element 10, electrode insulating layer 21, counter-electrode insulating layer 22, counter-electrode terminal 31, and electrode terminal 32. Battery 1 is, for example, an all-solid-state battery.

### [1. Power generation element]

Firstly, the specific configuration of power generation element 10 is described with reference to FIG. 1 and FIG. 2. FIG. 2 is a top view of power generation element 10 of battery 1 according to Embodiment 1. Note that FIG. 1 shows a cross section taken along line I-I shown in FIG. 2.

The shape of power generation element 10 in plan view is rectangular as shown in FIG. 2. In other words, the shape of power generation element 10 is a flattened cuboid. Here, "flattened" means that the thickness (i.e., the length in the z-axis direction) is shorter than each of the sides of the main surface (i.e., the length in each of the x-axis direction and the y-axis direction) or the maximum width. The shape of power generation element 10 in plan view may be polygonal such as square, hexagonal, or octagonal, or may be circular, oval, or the like. Note that, in a cross-sectional view such as FIG. 1, the thickness of each layer is exaggerated to clarify the layer structure of power generation element 10.

As shown in FIG. 1 and FIG. 2, power generation element 10 includes four side surfaces 11, 12, 13, and 14, and two main surfaces 15 and 16. In Embodiment 1, side surfaces 11, 12, 13, and 14 and main surfaces 15 and 16 are all flat.

Side surface 11 is an example of the first side surface. Side surface 12 is an example of the second side surface. Side surfaces 11 and 12 face away from each other, and are parallel to each other. Side surfaces 11 and 12 each include a different short side of main surface 15.

Side surfaces 13 and 14 face away from each other, and are parallel to each other. Side surfaces 13 and 14 each include a different long side of main surface 15.

Side surfaces 15 and 16 face away from each other, and are parallel to each other. Main surface 15 is the uppermost surface of power generation element 10. Main surface 16 is the lowermost surface of power generation element 10.

As shown in FIG. 1, power generation element 10 includes multiple battery cells 100. Battery cell 100 is a minimum unit of the battery, and also referred to as a unit cell. Multiple battery cells 100 are electrically connected in parallel and stacked. In Embodiment 1, all battery cells 100 of power generation element 10 are electrically connected in parallel. In the example shown in FIG. 1, the number of battery cells 100 of power generation element 10 is eight, but not limited to this. For example, the number of battery cells 100 of power generation element 10 may be an even number such as two or four, or an odd number such as three or five.

Each of battery cells 100 includes electrode layer 110, counter-electrode layer 120, and solid electrolyte layer 130. Electrode layer 110 includes electrode current collector 111 and electrode active material layer 112. Counter-electrode layer 120 includes counter-electrode current collector 121 and counter-electrode active material layer 122. In each of battery cells 100, electrode current collector 111, electrode active material layer 112, solid electrolyte layer 130, counter-electrode active material layer 122, and counter-electrode current collector 121 are stacked in this order in the z-axis direction.

Note that electrode layer 110 is one of the positive electrode layer or the negative electrode layer of battery cell 100. Counter-electrode layer 120 is the other of the positive electrode layer or the negative electrode layer of battery cell 100. The following describes, as an example, a case where electrode layer 110 is the negative electrode layer, and counter-electrode layer 120 is the positive electrode layer.

The configurations of battery cells 100 are substantially the same. In two adjacent battery cells 100, the order of arrangement of the layers included in one of battery cells 100 is reversed. In other words, battery cells 100 are arranged and stacked in the z-axis direction while alternately reversing the order of arrangement of the layers included in each of battery cells 100. In Embodiment 1, the number of battery cells 100 is an even number, and thus the lowermost layer and the uppermost layer of power generation element 10 are the current collectors of the same polarity.

The following describes each of the layers of battery cell 100 with reference to FIG. 3A. FIG. 3A is a cross-sectional view of battery cell 100 included in power generation element 10 according to Embodiment 1.

Each of electrode current collector 111 and counter-electrode current collector 121 is a conductive member which is foil-shaped, plate-shaped, or mesh-shaped. Each of electrode current collector 111 and counter-electrode current collector 121 may be, for example, a conductive thin film. For example, metals such as stainless steel (SUS), aluminum (Al), copper (Cu), and nickel (Ni) can be used as the material of electrode current collector 111 and counter-electrode current collector 121. Electrode current collector 111 and counter-electrode current collector 121 may be each formed using a different material.

The thickness of each of electrode current collector 111 and counter-electrode current collector 121 is, for example, at least 5 µm and at most 100 µm, but not limited to this. The thickness of each of electrode current collector 111 and counter-electrode current collector 121 may be 20 µm or less. The current-collector thickness of 20 µm or less allows improvement of energy density, improvement of output density, reduction in material cost, and the like. In Embodiment 1, single battery cells 100 are connected in parallel and stacked. Accordingly, the thickness of power generation element 10 can be kept small even when the number of battery cells connected in parallel is increased, thereby contributing to the improvement of energy density. An increase in the number of battery cells connected in parallel increases the number of current collectors, and thus a reduction in the thickness of the current collector is more useful to prevent an increase in the thickness of power generation element 10.

Electrode active material layer 112 is in contact with the main surface of electrode current collector 111. Note that electrode current collector 111 may include a current collector layer which is provided in a part in contact with electrode active material layer 112 and which includes a conductive material. Counter-electrode active material layer 122 is in contact with the main surface of counter-electrode current collector 121. Note that counter-electrode current collector 121 may include a current collector layer which is provided in a part in contact with counter-electrode active material layer 122 and which includes a conductive material.

Electrode active material layer 112 is arranged on the main surface of electrode current collector 111 on the side of counter-electrode layer 120. Electrode active material layer 112 includes, for example, a negative electrode active material as an electrode material. Electrode active material layer 112 is opposed to counter-electrode active material layer 122.

As the negative electrode active material contained in electrode active material layer 112, for example, a negative electrode active material such as graphite or metallic lithium can be used. As the material of the negative electrode active material, various types of materials which can withdraw and insert ions of lithium (Li), magnesium (Mg), or the like can be used.

As a material contained in electrode active material layer 112, for example, a solid electrolyte such as an inorganic solid electrolyte may be used. As the inorganic solid electrolyte, for example, a sulfide solid electrolyte or an oxide solid electrolyte can be used. As the sulfide solid electrolyte, for example, a mixture of lithium sulfide (Li₂S) and phosphorus pentasulfide (P₂S₅) can be used. As the material contained in electrode active material layer 112, for example, a conductive material such as acetylene black, or a binder for binding such as polyvinylidene fluoride may be used.

A paste-like paint in which the material contained in electrode active material layer 112 is kneaded together with a solvent is applied on the main surface of electrode current collector 111 and is dried, and thus electrode active material layer 112 is produced. After the drying, electrode layer 110 (which is also referred to as an electrode plate) including electrode active material layer 112 and electrode current collector 111 may be pressed so that the density of electrode active material layer 112 is increased. The thickness of electrode active material layer 112 is, for example, at least 5 µm and at most 300 µm, but not limited to this.

Counter-electrode active material layer 122 is arranged on the main surface of counter-electrode current collector 121 on the side of electrode layer 110. Counter-electrode active material layer 122 is, for example, a layer which includes a positive electrode material such as an active material. The positive electrode material is a material which forms the counter electrode of the negative electrode material. Counter-electrode active material layer 122 includes, for example, a positive electrode active material.

As the positive electrode active material contained in counter-electrode active material layer 122, for example, a positive electrode active material such as lithium cobaltate composite oxide (LCO), lithium nickelate composite oxide (LNO), lithium manganate composite oxide (LMO), lithium-manganese-nickel composite oxide (LMNO), lithium-manganese-cobalt composite oxide (LMCO), lithium-nickel-cobalt composite oxide (LNCO), or lithium-nickel-manganese-cobalt composite oxide (LNMCO) can be used. As the material of the positive electrode active material, various types of materials which can withdraw and insert ions of Li, Mg, or the like can be used.

As a material contained in counter-electrode active material layer 122, for example, a solid electrolyte such as an inorganic solid electrolyte may be used. As the inorganic solid electrolyte, for example, a sulfide solid electrolyte or an oxide solid electrolyte can be used. As the sulfide solid electrolyte, for example, a mixture of Li₂S and P₂S₅ can be used. The surface of the positive electrode active material may be coated with a solid electrolyte. As the material contained in counter-electrode active material layer 122, for example, a conductive material such as acetylene black, or a binder for binding such as polyvinylidene fluoride may be used.

A paste-like paint in which the material contained in counter-electrode active material layer 122 is kneaded together with a solvent is applied on the main surface of counter-electrode current collector 121 and is dried, and thus counter-electrode active material layer 122 is produced. After the drying, counter-electrode layer 120 (which is also referred to as a counter-electrode plate) including counter-electrode active material layer 122 and counter-electrode current collector 121 may be pressed so that the density of counter-electrode active material layer 122 is increased. The thickness of counter-electrode active material layer 122 is, for example, at least 5 µm and at most 300 µm, but not limited to this.

Solid electrolyte layer 130 is arranged between electrode active material layer 112 and counter-electrode active material layer 122. Solid electrolyte layer 130 is in contact with electrode active material layer 112 and counter-electrode active material layer 122. Solid electrolyte layer 130 includes an electrolyte material. As the electrolyte material, a common electrolyte for the battery can be used. The thickness of solid electrolyte layer 130 may be at least 5 µm and at most 300 µm or may be at least 5 µm and at most 100 µm.

Solid electrolyte layer 130 includes a solid electrolyte. As the solid electrolyte, for example, a solid electrolyte such as an inorganic solid electrolyte can be used. As the inorganic solid electrolyte, for example, a sulfide solid electrolyte or an oxide solid electrolyte can be used. As the sulfide solid electrolyte, for example, a mixture of Li₂S and P₂S₅ can be used. Note that solid electrolyte layer 130 may contain, in addition to the electrolyte material, for example, a binder for binding such as polyvinylidene fluoride.

In Embodiment 1, electrode active material layer 112, counter-electrode active material layer 122, and solid electrolyte layer 130 are maintained in the shape of parallel flat plates. With this, it is possible to suppress the occurrence of a crack or a collapse caused by bending. Note that electrode active material layer 112, counter-electrode active material layer 122, and solid electrolyte layer 130 may be smoothly curved together.

In Embodiment 1, when viewed from the z-axis direction, the end surface of counter-electrode current collector 121 on the side of side surface 11 and the end surface of electrode layer 110 on the side of side surface 11 are aligned. More specifically, when viewed from the z-axis direction, the end surface of counter-electrode current collector 121 on the side of side surface 11 and the end surface of electrode current collector 111 on the side of side surface 11 are aligned. The same is true for the end surface of counter-electrode current collector 121 on the side of side surface 12 and the end surface of electrode current collector 111 on the side of side surface 12.

More specifically, in battery cell 100, electrode current collector 111, electrode active material layer 112, solid electrolyte layer 130, counter-electrode active material layer 122, and counter-electrode current collector 121 are the same in shape and size, and thus their contours coincide with one another. In other words, the shape of battery cell 100 is a flattened cuboid-like flat plate.

As shown in FIG. 1, in Embodiment 1, a current collector is shared between two adjacent battery cells 100. For example, battery cell 100 of the lowermost layer and battery cell 100 of the second lowest layer share electrode current collector 111.

More specifically, as shown in FIG. 1, in multiple battery cells 100, two adjacent electrode layers 110 share own electrode current collector 111. Electrode active material layer 112 is provided on the both main surfaces of shared electrode current collector 111. Two adjacent counter-electrode layers 120 share own counter-electrode current collector 121. Counter-electrode active material layer 122 is provided on the both main surfaces of shared counter-electrode current collector 121.

Such battery 1 is formed by stacking not only battery cell 100 shown in FIG. 3A but also battery cell 100B shown in FIG. 3B and battery cell 100C shown in FIG. 3C in combination. Note that, in this disclosure, battery cell 100 shown in FIG. 3A is referred to as battery cell 100A.

Battery cell 100B shown in FIG. 3B has a configuration in which electrode current collector 111 is removed from battery cell 100A shown in FIG. 3A. In other words, electrode layer 110B of battery cell 100B includes only electrode active material layer 112.

Battery cell 100C shown in FIG. 3C has a configuration in which counter-electrode current collector 121 is removed from battery cell 100A shown in FIG. 3A. In other words, counter-electrode layer 120C of battery cell 100C includes only counter-electrode active material layer 122.

FIG. 4 is a cross-sectional view illustrating power generation element 10 according to Embodiment 1. FIG. 4 is a diagram in which only power generation element 10 is extracted from FIG. 1. As shown in FIG. 4, battery cell 100A is located in the lowermost layer, and battery cells 100B and 100C are alternately stacked upward. In doing so, battery cell 100B shown in FIG. 3B is turned upside down and stacked. In this way, power generation element 10 is formed.

Note that the method of forming power generation element 10 is not limited to this. For example, battery cell 100A may be located in the uppermost layer. Alternatively, battery cell 100A may be located in a layer different from both the uppermost layer and the lowermost layer. Moreover, multiple battery cells 100A may be used. Moreover, a unit of two battery cells 100 sharing a current collector may be formed by performing double-sided coating on one current collector, and the formed units may be stacked.

As described above, power generation element 10 according to Embodiment 1 includes battery cells 100 all connected in parallel, and does not include battery cells connected in series. Accordingly, in charging and discharging battery 1, unevenness in the charge and discharge state caused by the capacity difference of battery cells 100 is unlikely to occur. This considerably reduces the possibility of overcharging or over-discharging of some of multiple battery cells 100, thereby enhancing the reliability of battery 1.

### [2. Insulating layer]

Next, electrode insulating layer 21 and counter-electrode insulating layer 22 are described.

Electrode insulating layer 21 is one example of the first insulating member. As shown in FIG. 1, electrode insulating layer 21 covers electrode layer 110 at side surface 11. More specifically, electrode insulating layer 21 completely covers electrode current collector 111 and electrode active material layer 112 at side surface 11.

FIG. 5 is a side view illustrating a positional relationship between side surface 11 of power generation element 10 and electrode insulating layer 21 provided on side surface 11, according to Embodiment 1. Note that in FIG. 5, the same hatching as each layer shown in FIG. 1 is applied to the end surface of each layer at side surface 11. The same is true for FIG. 6 described below.

Part (a) of FIG. 5 is a side view of power generation element 10, and also a plan view of side surface 11 when viewed from the front. Part (b) of FIG. 5 illustrates side surface 11 in part (a) of FIG. 5 and electrode insulating layer 21 provided on side surface 11. In other words, part (b) of FIG. 5 is a side view of battery 1 in FIG. 1 when viewed from the negative side of the x-axis through transparent counter-electrode terminal 31.

As shown in part (b) of FIG. 5, at side surface 11, electrode insulating layer 21 covers electrode layer 110 of each of battery cells 100. Electrode insulating layer 21 does not cover at least a part of counter-electrode layer 120 of each of battery cells 100. Accordingly, in plan view of side surface 11, electrode insulating layer 21 has a stripe shape.

In doing so, electrode insulating layer 21 continuously covers electrode layers 110 of two adjacent battery cells 100. More specifically, electrode insulating layer 21 continuously covers from at least a part of solid electrolyte layer 130 of one of two adjacent battery cells 100 to at least a part of solid electrolyte layer 130 of the other of two adjacent battery cells 100.

As described above, electrode insulating layer 21 covers at least a part of solid electrolyte layer 130 at side surface 11. More specifically, in plan view of side surface 11, the contour of electrode insulating layer 21 overlaps with solid electrolyte layer 130. With this, even when the width (the length in the z-axis direction) varies depending on manufacturing variation of electrode insulating layer 21, electrode layer 110 is unlikely to be exposed. Accordingly, it is possible to prevent electrode layer 110 and counter-electrode layer 120 from being short-circuited through counter-electrode terminal 31 that is formed to cover electrode insulating layer 21. The end surface of solid electrolyte layer 130 including a powder-like material has very fine unevenness. Accordingly, electrode insulating layer 21 penetrates into this unevenness, thereby improving the adhesion strength of electrode insulating layer 21 and enhancing the reliability of insulation.

In Embodiment 1, electrode insulating layer 21 may cover entire solid electrolyte layer 130 at side surface 11. More specifically, the contour of electrode insulating layer 21 may overlap with the boundary between solid electrolyte layer 130 and counter-electrode active material layer 122. Note that electrode insulating layer 21 does not necessarily need to cover a part of solid electrolyte layer 130. For example, the contour of electrode insulating layer 21 may overlap with the boundary between solid electrolyte layer 130 and electrode active material layer 112.

In part (b) of FIG. 5, electrode insulating layer 21 is separately provided for each of electrode layers 110, but the present disclosure is not limited to this. For example, in addition to a part of the stripe shape, electrode insulating layer 21 may be provided along the z-axis at the end portions of side surface 11 in the y-axis direction. In other words, in plan view of side surface 11, electrode insulating layer 21 may be ladder-shaped. As described above, electrode insulating layer 21 may cover a part of counter-electrode current collector 121.

Counter-electrode insulating layer 22 is one example of the second insulating member. As shown in FIG. 1, counter-electrode insulating layer 22 covers counter-electrode layer 120 at side surface 12. More specifically, counter-electrode insulating layer 22 completely covers counter-electrode current collector 121 and counter-electrode active material layer 122 at side surface 12.

FIG. 6 is a side view illustrating a positional relationship between side surface 12 of power generation element 10 and counter-electrode insulating layer 22 provided on side surface 12, according to Embodiment 1. Part (a) of FIG. 6 is a side view of power generation element 10, and also a plan view of side surface 12 when viewed from the front. Part (b) of FIG. 6 illustrates side surface 12 in part (a) of FIG. 6 and counter-electrode insulating layer 22 provided on side surface 12. In other words, part (b) of FIG. 6 is a side view of battery 1 in FIG. 1 when viewed from the positive side of the x-axis through transparent electrode terminal 32.

As shown in part (b) of FIG. 6, at side surface 12, counter-electrode insulating layer 22 covers counter-electrode layer 120 of each of battery cells 100. Counter-electrode insulating layer 22 does not cover at least a part of electrode layer 110 of each of battery cells 100. Accordingly, in plan view of side surface 12, counter-electrode insulating layer 22 has a stripe shape.

In doing so, counter-electrode insulating layer 22 continuously covers counter-electrode layers 120 of two adjacent battery cells 100. More specifically, counter-electrode insulating layer 22 continuously covers from at least a part of solid electrolyte layer 130 of one of two adjacent battery cells 100 to at least a part of solid electrolyte layer 130 of the other of two adjacent battery cells 100.

As described above, counter-electrode insulating layer 22 covers at least a part of solid electrolyte layer 130 at side surface 12. More specifically, in plan view of side surface 12, the contour of counter-electrode insulating layer 22 overlaps with solid electrolyte layer 130. With this, even when the width (the length in the z-axis direction) varies depending on manufacturing variation of counter-electrode insulating layer 22, counter-electrode layer 120 is unlikely to be exposed. Accordingly, it is possible to prevent counter-electrode layer 120 and electrode layer 110 from being short-circuited through electrode terminal 32 that is formed to cover counter-electrode insulating layer 22. Counter-electrode insulating layer 22 penetrates into the unevenness on the end surface of solid electrolyte layer 130, thereby improving the adhesion strength of counter-electrode insulating layer 22 and enhancing the reliability of insulation.

In Embodiment 1, counter-electrode insulating layer 22 may cover entire solid electrolyte layer 130 at side surface 12. More specifically, the contour of counter-electrode insulating layer 22 may overlap with the boundary between solid electrolyte layer 130 and electrode active material layer 112. Note that counter-electrode insulating layer 22 does not necessarily need to cover a part of solid electrolyte layer 130. For example, the contour of counter-electrode insulating layer 22 may overlap with the boundary between solid electrolyte layer 130 and counter-electrode active material layer 122.

In part (b) of FIG. 6, counter-electrode insulating layer 22 is separately provided for each of counter-electrode layers 120, but the present disclosure is not limited to this. For example, in addition to a part of the stripe shape, counter-electrode insulating layer 22 may be provided along the z-axis at the end portions of side surface 12 in the y-axis direction. In other words, in plan view of side surface 12, counter-electrode insulating layer 22 may be ladder-shaped. As described above, counter-electrode insulating layer 22 may cover a part of electrode current collector 111.

In power generation element 10 according to Embodiment 1, the uppermost layer and the lowermost layer are each counter-electrode current collector 121. As shown in FIG. 1 and part (b) of FIG. 6, in the vicinity of each of the upper end and the lower end of side surface 12, counter-electrode insulating layer 22 covers a part of the main surface of counter-electrode current collector 121 located in each of the uppermost layer and the lowermost layer. With this, counter-electrode insulating layer 22 has resistance to an external force from the z-axis direction, and thus removal is prevented. When electrode terminal 32 is extended to main surface 15 or 16 of power generation element 10, it is possible to prevent a short circuit caused by the contact of electrode terminal 32 with counter-electrode current collector 121. As described above, it is possible to enhance the reliability of battery 1.

Each of electrode insulating layer 21 and counter-electrode insulating layer 22 is formed using an insulating material that has electrical insulating property. For example, each of electrode insulating layer 21 and counter-electrode insulating layer 22 includes a resin. The resin is, for example, an epoxy resin material, but not limited to this. Note that an inorganic material may be used as the insulating material. Available insulating materials are selected based on various properties such as flexibility, a gas barrier property, impact resistance, and heat resistance. Electrode insulating layer 21 and counter-electrode insulating layer 22 are each formed using the same material, but may be each formed using a different material.

### [3. Terminal]

Next, counter-electrode terminal 31 and electrode terminal 32 are described.

Counter-electrode terminal 31 is one example of the first terminal electrode. As shown in FIG. 1, counter-electrode terminal 31 covers side surface 11 and electrode insulating layer 21 to be electrically connected to counter-electrode layer 120. More specifically, counter-electrode terminal 31 covers electrode insulating layer 21 and a part of side surface 11 that is not covered by electrode insulating layer 21.

As shown in part (b) of FIG. 5, in the part of side surface 11 that is not covered by electrode insulating layer 21, the end surface of counter-electrode current collector 121 and the end surface of counter-electrode active material layer 122 are exposed. Accordingly, counter-electrode terminal 31 is in contact with the end surface of counter-electrode current collector 121 and the end surface of counter-electrode active material layer 122 to be electrically connected to counter-electrode layer 120. Counter-electrode active material layer 122 includes a powder-like material. Accordingly, like solid electrolyte layer 130, counter-electrode active material layer 122 has very fine unevenness. Counter-electrode terminal 31 penetrates into the unevenness on the end surface of counter-electrode active material layer 122, thereby improving the adhesion strength of counter-electrode terminal 31 and enhancing the reliability of electrical connection.

Counter-electrode terminal 31 is electrically connected to counter-electrode layer 120 of each of battery cells 100. In other words, counter-electrode terminal 31 plays a part of the function of electrically connecting battery cells 100 in parallel. As shown in FIG. 1, counter-electrode terminal 31 covers almost entire side surface 11 at once. In Embodiment 1, counter-electrode layer 120 is the positive electrode, and thus counter-electrode terminal 31 serves as the positive-electrode extraction electrode of battery 1.

In power generation element 10 according to Embodiment 1, the uppermost layer and the lowermost layer are each counter-electrode current collector 121. As shown in FIG. 1, in the vicinity of each of the upper end and the lower end of side surface 11, counter-electrode terminal 31 covers a part of the main surface of counter-electrode current collector 121 located in each of the uppermost layer and the lowermost layer. With this, counter-electrode terminal 31 has resistance to an external force from the z-axis direction, and thus removal is prevented. The contact area between counter-electrode terminal 31 and counter-electrode current collector 121 is increased, and thus connection resistance between counter-electrode terminal 31 and counter-electrode current collector 121 is decreased. Accordingly, the high current characteristics can be improved. For example, rapid charge of battery 1 becomes possible.

Electrode terminal 32 is one example of the second terminal electrode. As shown in FIG. 1, electrode terminal 32 covers side surface 12 and counter-electrode insulating layer 22 to be electrically connected to electrode layer 110. More specifically, electrode terminal 32 covers counter-electrode insulating layer 22 and a part of side surface 12 that is not covered by counter-electrode insulating layer 22.

As shown in part (b) of FIG. 6, in the part of side surface 12 that is not covered by counter-electrode insulating layer 22, the end surface of electrode current collector 111 and the end surface of electrode active material layer 112 are exposed. Accordingly, electrode terminal 32 is in contact with the end surface of electrode current collector 111 and the end surface of electrode active material layer 112 to be electrically connected to electrode layer 110. Electrode active material layer 112 includes a powder-like material. Accordingly, like solid electrolyte layer 130, electrode active material layer 112 has very fine unevenness. Electrode terminal 32 penetrates into the unevenness on the end surface of electrode active material layer 112, thereby improving the adhesion strength of electrode terminal 32 and enhancing the reliability of electrical connection.

Electrode terminal 32 is electrically connected to electrode layer 110 of each of battery cells 100. In other words, electrode terminal 32 plays a part of the function of electrically connecting battery cells 100 in parallel. As shown in FIG. 1, electrode terminal 32 covers almost entire side surface 12 at once. In Embodiment 1, electrode layer 110 is the negative electrode, and thus electrode terminal 32 serves as the negative-electrode extraction electrode of battery 1.

Counter-electrode terminal 31 and electrode terminal 32 are formed using a resin material or the like that is conductive. Alternatively, counter-electrode terminal 31 and electrode terminal 32 may be formed using a metal material such as solder. Available conductive materials are selected based on various properties such as flexibility, a gas barrier property, impact resistance, heat resistance, and solder wettability. Counter-electrode terminal 31 and electrode terminal 32 are each formed using the same material, but may be each formed using a different material.

As described above, counter-electrode terminal 31 and electrode terminal 32 each not only serve as the positive-electrode extraction electrode or the negative-electrode extraction electrode of battery 1, but also play a part of the function of connecting battery cells 100 in parallel. As shown in FIG. 1, counter-electrode terminal 31 and electrode terminal 32 are formed to be in close contact with and cover side surface 11 and side surface 12 of power generation element 10, respectively. Accordingly, it is possible to reduce these volumes. In other words, in comparison with the conventional tub electrode for current collection, the volume of the terminal electrode is reduced. Accordingly, it is possible to improve the energy density per volume of battery 1.

### [Embodiment 2]

Next, Embodiment 2 is described.

A battery according to Embodiment 2 differs from the battery according to Embodiment 1 in that the end surface of the current collector is connected to a conductive member different from the extraction terminal. The following description focuses on differences from Embodiment 1, and common descriptions are omitted or simplified.

FIG. 7 is a cross-sectional view illustrating a cross-sectional configuration of battery 201 according to Embodiment 2. As shown in FIG. 7, battery 201 differs from battery 1 shown in FIG. 1 in that multiple counter-electrode conductive members 231 and multiple electrode conductive members 232 are further included.

Counter-electrode conductive member 231 is a conductive member that covers at least a part of counter-electrode layer 120 at side surface 11. More specifically, counter-electrode conductive member 231 covers the end surface of counter-electrode current collector 121 and a part of the end surface of counter-electrode active material layer 122. For example, counter-electrode conductive member 231 is provided for each of counter-electrode current collectors 121, and covers the entire end surface of counter-electrode current collector 121. In plan view of side surface 11, counter-electrode conductive member 231 has a stripe shape. At side surface 11, counter-electrode conductive members 231 and electrode insulating layers 21 are alternately arranged in the z-axis direction.

All counter-electrode conductive members 231 are covered with counter-electrode terminal 31 to be electrically connected. In other words, counter-electrode layer 120 for each of battery cells 100 is electrically connected to counter-electrode terminal 31 through corresponding counter-electrode conductive member 231, and counter-electrode layers 120 are electrically connected in parallel through counter-electrode terminal 31.

Counter-electrode conductive member 231 has properties different from counter-electrode terminal 31. For example, counter-electrode conductive member 231 and counter-electrode terminal 31 are each formed using a different material. More specifically, counter-electrode conductive member 231 is formed using a material selected with a focus on high conductivity, alloying with counter-electrode current collector 121, and the like. Moreover, counter-electrode terminal 31 is formed using a material selected with a focus on flexibility, impact resistance, chemical stability, cost, ease of spreading in implementation, and the like.

Electrode conductive member 232 is a conductive member that covers at least a part of electrode layer 110 at side surface 12. More specifically, electrode conductive member 232 covers the end surface of electrode current collector 111 and a part of the end surface of electrode active material layer 112. For example, electrode conductive member 232 is provided for each of electrode current collector 111, and covers the entire end surface of electrode current collector 111. In plan view of side surface 12, electrode conductive member 232 has a stripe shape. At side surface 12, electrode conductive members 232 and counter-electrode insulating layers 22 are alternately arranged in the z-axis direction.

All electrode conductive members 232 are covered with electrode terminal 32 to be electrically connected. In other words, electrode layer 110 for each of battery cells 100 is electrically connected to electrode terminal 32 through corresponding electrode conductive member 232, and electrode layers 110 are electrically connected in parallel through electrode terminal 32.

Electrode conductive member 232 has properties different from electrode terminal 32. For example, electrode conductive member 232 and electrode terminal 32 are each formed using a different material. More specifically, the focus put on a material used for electrode conductive member 232 and electrode terminal 32 is the same as that of counter-electrode conductive member 231 and counter-electrode terminal 31, respectively.

As described above, a suitable material can be used as the material of the extraction terminal of battery 201, and it is possible to improve the performance of the battery and facilitate manufacturing the battery.

Note that FIG. 7 shows a case where counter-electrode conductive member 231 is connected to each of all counter-electrode current collectors 121, but there may be counter-electrode current collector 121 to which counter-electrode conductive member 231 is not connected. The same is true for electrode current collector 111. Moreover, one of counter-electrode conductive member 231 and electrode conductive member 232 need not be provided.

### [Embodiment 3]

Next, Embodiment 3 is described.

A battery according to Embodiment 3 differs from the battery according to Embodiment 1 in that the current collector protrudes relative to the active material layer at the side surface of the power generation element. The following description focuses on differences from Embodiment 1, and common descriptions are omitted or simplified.

FIG. 8 is a cross-sectional view illustrating a cross-sectional configuration of battery 301 according to Embodiment 3. As shown in FIG. 8, power generation element 10 of battery 301 differs from battery 1 shown in FIG. 1 in that battery cells 300 is included instead of battery cells 100.

Each of battery cells 300 includes electrode layer 310, counter electrode layer 320, and solid electrolyte layer 130. Electrode layer 310 includes electrode current collector 311 and electrode active material layer 112. Counter electrode layer 320 includes counter-electrode current collector 321 and counter-electrode active material layer 122.

As shown in FIG. 8, at side surface 11, counter-electrode current collector 321 protrudes relative to counter-electrode active material layer 122. In Embodiment 3, at side surface 11, the end surface of counter-electrode active material layer 122, the end surface of solid electrolyte layer 130, the end surface of electrode active material layer 112, and the end surface of electrode current collector 311 are in the same plane and form a flat surface. Counter-electrode current collector 321 protrudes outward from the flat surface. Note that "outward" refers to a direction away from the center of power generation element 10. For example, "outward" corresponds to the negative direction of the x-axis with respect to side 11.

Counter-electrode current collector 321 protrudes, and thus counter-electrode terminal 31 is in contact with the main surface of protrusion 321a of counter-electrode current collector 321. Note that protrusion 321a is a part of counter-electrode current collector 321, which is located on the negative side of the x-axis beyond the end surface of counter-electrode active material layer 122 on the negative side of the x-axis. With this, it is possible to increase the contact area between counter-electrode terminal 31 and counter-electrode current collector 321, and decrease the connection resistance between them.

The amount of protrusion of counter-electrode current collector 321, i.e., the length of protrusion 321a in the x-axis direction is not particularly limited. For example, the amount of protrusion of counter-electrode current collector 321 is at least 4.5 times longer than the thickness of counter-electrode current collector 321 (i.e., the length in the z-axis direction). With this, in Embodiment 3, counter-electrode terminal 31 is in contact with the both main surfaces of protrusion 321a. Accordingly, it is possible to increase the contact area to at least 10 times that of counter-electrode current collector 321 that does not protrude.

Alternatively, the amount of protrusion of counter-electrode current collector 321 may be at least 9 times longer than the thickness of counter-electrode current collector 321. With this, even when counter-electrode terminal 31 is in contact with either one of the both main surfaces of protrusion 321a, it is possible to increase the contact area to at least 10 times that of counter-electrode current collector 321 that does not protrude.

In Embodiment 3, at side surface 12, electrode current collector 311 also has the same configuration. In other words, at side surface 12, electrode current collector 311 protrudes relative to electrode active material layer 112. In Embodiment 3, at side surface 12, the end surface of electrode active material layer 112, the end surface of solid electrolyte layer 130, the end surface of counter-electrode active material layer 122, and the end surface of counter-electrode current collector 321 are in the same plane and form a flat surface. Electrode current collector 311 protrudes outward (more specifically, in the positive direction of the x-axis) from the flat surface.

Electrode current collector 311 protrudes, and thus electrode terminal 32 is in contact with the main surface of protrusion 311a of electrode current collector 311. Note that protrusion 311a is a part of electrode current collector 311, which is located on the positive side of the x-axis beyond the end surface of electrode active material layer 112 on the positive side of the x-axis. With this, it is possible to increase the contact area between electrode terminal 32 and electrode current collector 311, and decrease the connection resistance between them.

The amount of protrusion of electrode current collector 311, i.e., the length of protrusion 311a in the x-axis direction is not particularly limited. For example, like counter-electrode current collector 321, the amount of protrusion of electrode current collector 311 may be at least 4.5 or 9 times longer than the thickness of electrode current collector 311.

Note that each of protrusion 311a and protrusion 321a is formed by not providing counter-electrode active material layer 122 or electrode active material layer 112 at the end portion of the current collector. Alternatively, each of protrusion 311a and protrusion 321a is formed by forming counter-electrode active material layer 122 or electrode active material layer 112 on the entire surface of the current collector, and removing the end portion of counter-electrode active material layer 122 or electrode active material layer 112. For example, the removal is performed using semi-cutting in which only the current collector remains, polishing, sandblasting, brushing, etching, or plasma irradiation. For example, the etching may be performed using laser etching, i.e., laser irradiation. Alternatively, the etching may be wet etching.

As described above, with battery 301 according to Embodiment 3, the contact area between the current collector and the extraction terminal is increased, and thus the connection resistance between them is decreased. This improves the high current characteristics of battery 301, and thus for example, rapid charge becomes possible.

Note that Embodiment 3 shows a case where both counter-electrode current collector 321 and electrode current collector 311 protrude, but either one of counter-electrode current collector 321 or electrode current collector 311 may protrude.

### [Embodiment 4]

Next, Embodiment 4 is described.

A battery according to Embodiment 4 differs from the battery according to Embodiment 1 in that the active material layer and others not covered with the insulating layer are recessed relative to the current collector at the side surface of the power generation element. The following description focuses on differences from Embodiment 1, and common descriptions are omitted or simplified.

FIG. 9 is a cross-sectional view illustrating a cross-sectional configuration of battery 401 according to Embodiment 4. As shown in FIG. 9, power generation element 10 of battery 401 differs from battery 1 shown in FIG. 1 in that battery cells 400 is included instead of battery cells 100.

Each of battery cells 400 includes electrode layer 410, counter electrode layer 420, and solid electrolyte layer 430. Electrode layer 410 includes electrode current collector 111 and electrode active material layer 412. Counter electrode layer 420 includes counter-electrode current collector 121 and counter-electrode active material layer 422.

As shown in FIG. 9, at side surface 11, counter-electrode active material layer 422 is recessed relative to electrode layer 410. Counter-electrode active material layer 422 is recessed relative to counter-electrode current collector 121. More specifically, counter-electrode active material layer 422 is recessed inward relative to both electrode layer 410 and counter-electrode current collector 121. Note that "inward" refers to a direction toward the center of power generation element 10. For example, "inward" corresponds to the positive direction of the x-axis with respect to side 11.

In Embodiment 4, at side surface 11, at least a part of solid electrolyte layer 430 is recessed relative to electrode layer 410. More specifically, a part of the end surface of solid electrolyte layer 430 that is not covered with electrode insulating layer 21 is obliquely inclined with respect to the z-axis direction.

Counter-electrode active material layer 422 is recessed, and thus counter-electrode current collector 121 protrudes relative to counter-electrode active material layer 422. Counter-electrode current collector 121 protrudes, and thus counter-electrode terminal 31 is in contact with the main surface of protrusion 421a of counter-electrode current collector 121. With this, it is possible to increase the contact area between counter-electrode terminal 31 and counter-electrode current collector 121, and decrease the connection resistance between them.

The amount of recess of counter-electrode active material layer 422, i.e., the amount of protrusion of counter-electrode current collector 121 is not particularly limited. For example, like Embodiment 3, the amount of recess of counter-electrode active material layer 422 may be at least 4.5 or 9 times longer than the thickness of counter-electrode current collector 121.

In Embodiment 4, at side surface 12, electrode active material layer 412 also has the same configuration. In other words, at side surface 12, electrode active material layer 412 is recessed relative to counter-electrode layer 420. Electrode active material layer 412 is recessed relative to electrode current collector 111. More specifically, electrode active material layer 412 is recessed inward (i.e., the negative direction of the x-axis) relative to both counter-electrode layer 420 and electrode current collector 111.

In Embodiment 4, at side surface 12, at least a part of solid electrolyte layer 430 is recessed relative to counter-electrode layer 420. More specifically, a part of the end surface of solid electrolyte layer 430 that is not covered with counter-electrode insulating layer 22 is obliquely inclined with respect to the z-axis direction.

Electrode active material layer 412 is recessed, and thus electrode current collector 111 protrudes relative to electrode active material layer 412. Electrode current collector 111 protrudes, and thus electrode terminal 32 is in contact with the main surface of protrusion 411a of electrode current collector 111. With this, it is possible to increase the contact area between electrode terminal 32 and electrode current collector 111, and decrease the connection resistance between them.

The amount of recess of electrode active material layer 412, i.e., the amount of protrusion of electrode current collector 111 is not particularly limited. For example, like Embodiment 3, the amount of recess of electrode active material layer 412 may be at least 4.5 or 9 times longer than the thickness of electrode current collector 111.

Note that the recess of the active material layer is created in the same manner as the method of protruding the current collector in Embodiment 3. For example, the recess of the active material layer is created using semi-cutting, polishing, sandblasting, brushing, etching, or plasma irradiation, in which only the current collector remains. For example, the etching may be performed, for example, using laser etching, i.e., laser irradiation. Alternatively, the etching may be wet etching.

In Embodiment 4, in plan view, electrode current collector 111 and counter-electrode current collector 121 are the same in shape and size, and thus their contours coincide with each other. Accordingly, as shown in FIG. 9, in sectional view, the end surface of electrode current collector 111 and the end surface of counter-electrode current collector 121 are aligned in the z-axis direction. Although the details are described below, the contour of electrode current collector 111 and the contour of counter-electrode current collector 121 are aligned with each other by forming a layered body of multiple stacked battery cells 100 and collectively cutting the layered body. After this, the end surface of the active material layer is recessed. In this manner, battery 401 according to Embodiment 4 is manufactured. As described above, a simultaneous process such as collectively cutting can be performed on battery cells 100, and thus it is possible to reduce the property difference of battery cells 100.

As described above, with battery 401 according to Embodiment 4, the contact area between the current collector and the extraction terminal is increased, and thus the connection resistance between them is decreased. This improves the high current characteristics of battery 401, and thus for example, rapid charge becomes possible.

Note that Embodiment 4 shows a case where both counter-electrode active material layer 422 and electrode active material layer 412 are recessed, but either one of counter-electrode active material layer 422 or electrode active material layer 412 may be recessed. Moreover, solid electrolyte layer 430 need not be recessed in at least one of side surface 11 or side surface 12.

### [Embodiment 5]

Next, Embodiment 5 is described.

A battery according to Embodiment 5 differs from the battery according to Embodiment 1 in that a sealing member is further provided. The following description focuses on differences from Embodiment 1, and common descriptions are omitted or simplified.

FIG. 10 is a cross-sectional view illustrating a cross-sectional configuration of battery 501 according to Embodiment 5. As shown in FIG. 10, battery 501 includes sealing member 540 in addition to the components of battery 1 according to Embodiment 1.

Sealing member 540 does not cover at least a part of each of counter-electrode terminal 31 and electrode terminal 32, and seals power generation element 10. For example, sealing member 540 is provided to prevent power generation element 10, electrode insulating layer 21, and counter-electrode insulating layer 22 from being exposed.

For example, sealing member 540 is formed using an insulating material which is electrically insulating. As the insulating material, for example, a common material for the battery sealing member such as a sealant can be used. As the insulating material, for example, a resin material can be used. Note that the insulating material may be a material which is insulating and non-ionically conductive. For example, the insulating material may be at least one of epoxy resin, acrylic resin, polyimide resin, or silsesquioxane.

Note that sealing member 540 may include multiple different insulating materials. For example, sealing member 540 may have a multilayer structure. Each of the layers in the multilayer structure may be formed using a different material to have different properties.

Sealing member 540 may include a particulate metal oxide material. As the metal oxide material, silicon oxide, aluminum oxide, titanium oxide, zinc oxide, cerium oxide, iron oxide, tungsten oxide, zirconium oxide, calcium oxide, zeolite, glass, or the like can be used. For example, sealing member 540 may be formed using a resin material in which multiple particles of the metal oxide material are dispersed.

It is sufficient that the particle size of the metal oxide material is less than or equal to the distance between electrode current collector 111 and counter-electrode current collector 121. For example, the particle shape of the metal oxide material is a spherical shape, an ellipsoidal shape, or a rod shape, but is not limited to these shapes.

With provided sealing member 540, it is possible to enhance the reliability of battery 501 at various points such as mechanical strength, short-circuit prevention, and a moisture-proof property.

### [Variations]

Next, variations of Embodiments 1 to 5 described above are described.

Each of the variations differs from each embodiment in the region of the insulating layer covering the side surface. The following description focuses on differences from each embodiment, and common descriptions are omitted or simplified.

FIG. 11 is a cross-sectional view illustrating a cross-sectional configuration of battery 601 according to Variation 1. As shown in FIG. 11, battery 601 differs from battery 1 according to Embodiment 1 in that electrode insulating layer 621 and counter-electrode insulating layer 622 are included instead of electrode insulating layer 21 and counter-electrode insulating layer 22.

As shown in FIG. 11, at side surface 11, electrode insulating layer 621 covers not only electrode layer 110 but also solid electrolyte layer 130 and a part of counter-electrode layer 120. In other words, electrode insulating layer 621 covers from electrode layer 110 to a part of counter-electrode layer 120. More specifically, electrode insulating layer 621 covers a part of counter-electrode active material layer 122. In Variation 1, electrode insulating layer 621 continuously covers from at least a part of counter-electrode active material layer 122 of one of two adjacent battery cells 100 to at least a part of counter-electrode active material layer 122 of the other of two adjacent battery cells 100. For example, electrode insulating layer 621 completely covers one electrode current collector 111, electrode active material layers 112 located on opposite sides of one electrode current collector 111, and two solid electrolyte layers 130 located on opposite sides of one electrode current collector 111. For example, in plan view of side surface 11, the contour of electrode insulating layer 621 overlaps with counter-electrode active material layer 122.

With this, even when the width (the length in the z-axis direction) varies depending on manufacturing variation of electrode insulating layer 621, electrode layer 110 is extremely unlikely to be exposed. Accordingly, it is possible to prevent electrode layer 110 and counter-electrode layer 120 from being short-circuited through counter-electrode terminal 31. Moreover, electrode insulating layer 621 penetrates into the unevenness on the end surface of counter-electrode active material layer 122, thereby improving the adhesion strength of electrode insulating layer 621 and enhancing the reliability of insulation.

Note that, at side surface 11, electrode insulating layer 621 may cover entire counter-electrode active material layer 122. More specifically, the contour of electrode insulating layer 621 may overlap with the boundary between counter-electrode active material layer 122 and counter-electrode current collector 121.

In Variation 1, at side surface 12, counter-electrode insulating layer 622 also has the same configuration. More specifically, at side surface 12, counter-electrode insulating layer 622 covers not only counter-electrode layer 120 but also solid electrolyte layer 130 and a part of electrode layer 110. In other words, counter-electrode insulating layer 622 covers from counter-electrode layer 120 to a part of electrode layer 110. More specifically, counter-electrode insulating layer 622 covers a part of electrode active material layer 112. In Variation 1, counter-electrode insulating layer 622 continuously covers from at least a part of electrode active material layer 112 of one of two adjacent battery cells 100 to at least a part of electrode active material layer 112 of the other of two adjacent battery cells 100. For example, counter-electrode insulating layer 622 completely covers one counter-electrode current collector 121, counter-electrode active material layers 122 located on opposite sides of one counter-electrode current collector 121, and two solid electrolyte layers 130 located on opposite sides of one counter-electrode current collector 121.

For example, in plan view of side surface 12, the contour of counter-electrode insulating layer 622 overlaps with electrode active material layer 112. With this, even when the width (the length in the z-axis direction) varies depending on manufacturing variation of counter-electrode insulating layer 622, counter-electrode layer 120 is extremely unlikely to be exposed. Accordingly, it is possible to prevent counter-electrode layer 120 and electrode layer 110 from being short-circuited through electrode terminal 32. Moreover, counter-electrode insulating layer 622 penetrates into the unevenness on the end surface of electrode active material layer 112, thereby improving the adhesion strength of counter-electrode insulating layer 622 and enhancing the reliability of insulation.

Note that, at side surface 12, counter-electrode insulating layer 622 may cover entire electrode active material layer 112. More specifically, the contour of counter-electrode insulating layer 622 may overlap with the boundary between electrode active material layer 112 and electrode current collector 111.

Although FIG. 11 shows a variation of battery 1 according to Embodiment 1, as seen from battery 602 shown in FIG. 12, electrode insulating layer 621 and counter-electrode insulating layer 622 described above may be applied to battery 201 according to Embodiment 2.

FIG. 12 is a cross-sectional view illustrating a cross-sectional configuration of battery 602 according to Variation 2. In battery 602 shown in FIG. 12, electrode insulating layer 621 and counter-electrode conductive member 231 are in contact with each other at side surface 11. More specifically, side surface 11 is covered by electrode insulating layer 621 and counter-electrode conductive member 231 without a gap. Accordingly, counter-electrode terminal 31 is not in direct contact with side surface 11.

The same is true for side surface 12. Counter-electrode insulating layer 622 and electrode conductive member 232 are in contact with each other. More specifically, side surface 12 is covered by counter-electrode insulating layer 622 and electrode conductive member 232 without a gap. Accordingly, electrode terminal 32 is not in direct contact with side surface 12.

Also in this case, like battery 501, the possibility of a short circuit between electrode layer 110 and counter-electrode layer 120 can be considerably reduced, and thus it is possible to enhance the reliability of battery 602.

Moreover, as seen from battery 603 shown in FIG. 13, electrode insulating layer 621 and counter-electrode insulating layer 622 described above may be applied to battery 401 according to

### Embodiment 4.

FIG. 13 is a cross-sectional view illustrating a cross-sectional configuration of battery 603 according to Variation 3. In battery 603 shown in FIG. 13, electrode insulating layer 621 covers to a part of recessed counter-electrode active material layer 422 at side surface 11. At side surface 12, counter-electrode insulating layer 622 covers to a part of recessed electrode active material layer 412.

Also in this case, like battery 601, the possibility of a short circuit between electrode layer 410 and counter-electrode layer 420 can be considerably reduced, and thus it is possible to enhance the reliability of battery 603.

### [Manufacturing Method]

Next, a method of manufacturing the battery according to each of the embodiments or the variations described above is described.

FIG. 14 is a flowchart illustrating an example of the method of manufacturing the battery according to each embodiment or each variation. More specifically, FIG. 14 shows an example of the method of manufacturing battery 301, 401, or 603 shown in FIG.8, FIG. 9, or FIG. 13, respectively. The following describes a case of battery 401.

As shown in FIG. 14, first, multiple battery cells are prepared (S10, step (i)). For example, battery cells to be prepared are battery cells 100A, 100B, and 100C shown in FIG. 3A, FIG. 3B, and FIG. 3C, respectively.

Next, multiple battery cells 100 are stacked (S20, step (ii)). More specifically, a layered body is formed which includes multiple battery cells 100 stacked in turn so that the order of arrangement of electrode layer 110, counter-electrode layer 120, and solid electrolyte layer 130 is alternately reversed. In the present embodiment, battery cells 100A, 100B, and 100C are stacked in appropriate combination, and thereby, for example, power generation element 10 shown in FIG. 4 is formed. Power generation element 10 is an example of the layered body.

Note that, after multiple battery cells 100 are stacked, the side surface of power generation element 10 may be flattened. For example, power generation element 10 with flat side surfaces can be formed by collectively cutting the layered body of multiple battery cells 100. The cutting process is performed using knife cutting, laser cutting, jet cutting, or the like.

Next, an insulating layer is formed on the side surface of power generation element 10 (S30, step (iii)). More specifically, electrode insulating layer 21 for covering electrode layer 110 is formed at side surface 11. Counter-electrode insulating layer 22 for covering counter-electrode layer 120 is formed at side surface 12.

Electrode insulating layer 21 and counter-electrode insulating layer 22 are formed, for example, by applying and curing a fluid resin material. The applying is performed using inkjet printing, spray printing, screen printing, gravure printing, or the like. The curing is performed using drying, heating, light illumination, or the like depending on the resin material to be used.

Note that, in forming electrode insulating layer 21 and counter-electrode insulating layer 22, a protective member may be formed by masking a region where the insulating layer should not be formed using a tape or the like or by a resist process to prevent the end surface of counter-electrode current collector 121 and the end surface of electrode current collector 111 from being insulated. The protective member is removed after electrode insulating layer 21 and counter-electrode insulating layer 22 are formed. Accordingly, it is possible to ensure the conductivity of each of the current collectors.

Next, an end-surface recession process is performed (S40, step (v)). More specifically, the current collector is protruded relative to the active material layer by recessing the end surface of the active material layer of power generation element 10. More specifically, at side surface 11 of power generation element 10, counter-electrode current collector 121 which is a part of counter-electrode layer 120 is protruded relative to counter-electrode active material layer 122 which is the remaining part of counter-electrode layer 120.

For example, polishing, sandblasting, brushing, etching, or plasma irradiation is performed on side surface 11. In doing so, the etching may be performed, for example, using laser etching, i.e., laser irradiation. Alternatively, the etching may be wet etching. In this case, electrode insulating layer 21 serves as a protective member against each process. For example, when the sandblasting is performed on side surface 11, a part covered with electrode insulating layer 21 is not polished, and a part not covered with electrode insulating layer 21, in particular, the end surface of counter-electrode layer 120, and the like is polished and recessed. In doing so, counter-electrode active material layer 122 is removed more than counter-electrode current collector 121 since counter-electrode active material layer 122 is more brittle than counter-electrode current collector 121. In this manner, counter-electrode active material layer 122 is recessed relative to counter-electrode current collector 121. In other words, as shown in FIG. 9, counter-electrode active material layer 422 with the recessed end surface is formed. Stated differently, counter-electrode current collector 121 protrudes relative to counter-electrode active material layer 422.

Electrode active material layer 112 is recessed relative to electrode current collector 111 by performing the same process on side surface 12. In other words, as shown in FIG. 9, electrode active material layer 412 with the recessed end surface is formed. Stated differently, electrode current collector 111 protrudes relative to electrode active material layer 412.

Next, an extraction terminal is formed on the side surface of power generation element 10 (S50, step (iv)). More specifically, counter-electrode terminal 31 for electrically connecting multiple counter-electrode layers 120 is formed on side surface 11. Electrode terminal 32 for electrically connecting multiple electrode layers 110 is formed on side surface 12.

For example, counter-electrode terminal 31 is formed by applying and curing a conductive resin to cover electrode insulating layer 21 and a part of side surface 11 that is not covered with electrode insulating layer 21. Electrode terminal 32 is formed by applying and curing a conductive resin to cover counter-electrode insulating layer 22 and a part of side surface 12 that is not covered with counter-electrode insulating layer 22. Note that counter-electrode terminal 31 and electrode terminal 32 may be formed, for example, by printing, plating, evaporating, spattering, welding, soldering, bonding, or any other method.

Through the above processes, battery 401 shown in FIG. 9 can be manufactured.

Note that a process of pressing multiple battery cells 100 prepared in Step S10 in the stacking direction may be performed individually or after the stacking of the battery cells.

In the example shown in FIG. 14, the end-surface recession process (S40) is performed after the forming of the insulating layer (S30) and before the forming of the extraction terminal (S50), but the present disclosure is not limited to this. For example, after the end-surface recession process is performed on each of battery cells 100 prepared in Step S10, the stacking of battery cells 100 (S20) may be performed. For example, the current collector can be protruded relative to the active material layer by partial cutting in which only the current collector is left.

Moreover, as shown in FIG. 15, the end-surface recession process (S40) need not be performed. FIG. 15 is a flowchart illustrating an example of the method of manufacturing the battery according to each embodiment or each variation. More specifically, FIG. 15 shows an example of the method of manufacturing battery 1 shown in FIG.1 or battery 601 shown in FIG. 11.

Moreover, after the forming of the layered body (S20) and before the forming of the extraction terminal (S50), counter-electrode conductive member 231 and electrode conductive member 232 shown in FIG. 7 or FIG. 12 may be formed. Counter-electrode conductive member 231 and electrode conductive member 232 may be formed, for example, by printing, plating, evaporating, spattering, welding, soldering, bonding, or any other method.

Moreover, after the forming of the extraction terminal (S50), sealing member 540 shown in FIG. 10 may be formed. Sealing member 540 is formed, for example, by applying and curing a fluid resin material. The applying is performed using inkjet printing, spray printing, screen printing, gravure printing, or the like. The curing is performed using drying, heating, light illumination, or the like depending on the resin material to be used.

### [Other Embodiments]

Although the battery and the method of manufacturing a battery according to one or more aspects have been described above based on the embodiments, the present disclosure is not limited to these embodiments. Embodiments obtained by performing various types of variations conceived by a person skilled in the art on the present embodiment and embodiments established by combining constituent elements in different embodiments are also included in the scope of the present disclosure without departing from the spirit of the present disclosure.

For example, although the above embodiments describe a case where the terminal electrode is provided on each of side surfaces 11 and 12, the terminal electrode may be provided on each of side surfaces 13 and 14. In other words, side surface 13 may be an example of the first side surface, and side surface 14 may be an example of the second side surface. The terminal electrode may be provided on each of: one of side surfaces 11 and 12; and one of side surfaces 13 and 14. In other words, the terminal electrode may be provided along each of two adjacent sides of main surface 15.

Moreover, multiple terminal electrodes of the same polarity may be provided. For example, the terminal electrode connected to the counter-electrode layer may be provided on each of the two adjacent side surfaces, and the terminal electrode connected to the electrode layer may be provided on each of the remaining two adjacent side surfaces. Alternatively, the terminal electrode connected to the counter-electrode layer may be provided on each of the two facing side surfaces, and the terminal electrode connected to the electrode layer may be provided on each of the remaining two facing side surfaces.

Moreover, although the above embodiments describe a case where the current collector is shared with two adjacent battery cells, the current collector need not be shared. More specifically, multiple battery cells 100A each of which is shown in FIG. 3A may be stacked alongside each other. In this case, two current collectors of the same polarity are overlapped with each other. In doing so, the two current collectors may be in direct contact with each other, or a conductive material or an adhesive material may be provided between the two current collectors.

Moreover, for example, an external electrode may be formed on the topmost surface of each of the electrode terminal and the counter-electrode terminal using a method such as plating, printing, or soldering. With the external electrode provided for the battery, it is possible to further enhance the implementation of the battery.

Moreover, although the above embodiments describe a case where each battery includes both counter-electrode terminal 31 and electrode terminal 32, each battery may include only one of them. In other words, one of the positive electrode and the negative electrode of the battery may be extracted by a tab electrode.

Moreover, in the above embodiments, various changes, replacement, addition, omission, and the like can be performed in the scope of claims or a scope equivalent thereto.

### [Industrial Applicability]

The present disclosure can be utilized, for example, as batteries for electronic devices, electrical apparatuses, electric vehicles, and the like.

### [Reference Signs List]

1, 201, 301, 401, 501, 601, 602, 603 battery
10 power generation element
11, 12, 13, 14 side surface
15, 16 main surface
21, 621 electrode insulating layer
22, 622 counter-electrode insulating layer
31 counter-electrode terminal
32 electrode terminal
100, 100A, 100B, 100C, 300, 400 battery cell
110, 110B, 310, 410 electrode layer
111, 311 electrode current collector
112, 412 electrode active material layer
120, 120C, 320, 420 counter-electrode layer
121, 321 counter-electrode current collector
122, 422 counter-electrode active material layer
130, 430 solid electrolyte layer
231 counter-electrode conductive member
232 electrode conductive member
311a, 321a, 411a, 421a protrusion
540 sealing member

## Claims

1. A battery comprising:
a power generation element including a plurality of battery cells each of which includes an electrode layer, a counter-electrode layer, and a solid electrolyte layer located between the electrode layer and the counter-electrode layer, the plurality of battery cells being electrically connected in parallel and stacked;
a first insulating member covering an electrode layer among the electrode layers at a first side surface of the power generation element; and
a first terminal electrode covering the first side surface and the first insulating member, and electrically connected to a counter-electrode layer among the counter-electrode layers.

2. The battery according to claim 1, wherein
the counter-electrode layer includes:
a counter-electrode current collector; and
a counter-electrode active material layer located between the counter-electrode current collector and the solid electrolyte layer,
at the first side surface, the counter-electrode current collector protrudes relative to the counter-electrode active material layer, and
the first terminal electrode is in contact with a main surface of the counter-electrode current collector.

3. The battery according to claim 2, wherein
at the first side surface, the counter-electrode active material layer is recessed relative to the electrode layer.

4. The battery according to claim 2 or 3, wherein
an end surface of the counter-electrode current collector on the first side surface side and an end surface of the electrode layer on the first side surface side are aligned when viewed from a direction orthogonal to a main surface of the power generation element.

5. The battery according to any one of claims 2 to 4, wherein
a thickness of the counter-electrode current collector is less than or equal to 20 µm.

6. The battery according to any one of claims 1 to 5, wherein
at the first side surface, the first insulating member covers at least a part of a solid electrolyte layer among the solid electrolyte layers.

7. The battery according to claim 6, wherein
at the first side surface, the first insulating member covers from an electrode layer among the electrode layers to a part of a corresponding one of the counter-electrode layers along a stacking direction of the power generation element.

8. The battery according to any one of claims 1 to 7, further comprising:
a conductive member covering at least a part of a counter-electrode layer among the counter-electrode layers at the first side surface, wherein
the first terminal electrode further covers the conductive member.

9. The battery according to any one of claims 1 to 8, wherein
at the first side surface, the first insulating member covers the electrode layer of each of the plurality of battery cells, and
the first terminal electrode is electrically connected to the counter-electrode layer of each of the plurality of battery cells.

10. The battery according to claim 9, wherein
in plan view of the first side surface, the first insulating member has a stripe shape.

11. The battery according to any one of claims 1 to 10, further comprising:
a second insulating member covering a counter-electrode layer among the counter-electrode layers at a second side surface of the power generation element; and
a second terminal electrode covering the second side surface and the second insulating member, and electrically connected to an electrode layer among the electrode layers.

12. The battery according to claim 11, wherein
the electrode layer includes:
an electrode current collector; and
an electrode active material layer located between the electrode current collector and the solid electrolyte layer,
at the second side surface, the electrode current collector protrudes relative to the electrode active material layer, and
the second terminal electrode is in contact with a main surface of the electrode current collector.

13. The battery according to claim 12, wherein
at the second side surface, the electrode active material layer is recessed relative to the counter-electrode layer.

14. The battery according to any one of claims 11 to 13, wherein
at the second side surface, the second insulating member covers the counter-electrode layer of each of the plurality of battery cells, and
the second terminal electrode is electrically connected to the electrode layer of each of the plurality of battery cells.

15. The battery according to any one of claims 1 to 14, wherein
the first insulating member includes a resin.

16. The battery according to any one of claims 1 to 15, further comprising:
a sealing member that does not cover at least a part of the first terminal electrode, and seals the power generation element.

17. A method of manufacturing a battery, the method comprising:
(i) preparing a plurality of battery cells each of which includes an electrode layer, a counter-electrode layer, and a solid electrolyte layer located between the electrode layer and the counter-electrode layer;
(ii) forming a layered body of the plurality of battery cells stacked in turn so that an order of arrangement of the electrode layer, the counter-electrode layer, and the solid electrolyte layer is alternately reversed;
(iii) covering an electrode layer among the electrode layers with an insulating member at one side surface of the layered body; and
(iv) covering the one side surface and the insulating member with a terminal electrode electrically connected to a counter-electrode layer among the counter-electrode layers.

18. The method according to claim 17, further comprising:
(v) protruding, at the one side surface, a part of the counter-electrode layer relative to a remaining part of the counter-electrode layer.

19. The method according to claim 18, wherein
(v) is performed after (iii) and before (iv).

20. The method according to claim 18 or 19, wherein
(v) is implemented by partial cutting, polishing, sandblasting, brushing, etching, or plasma irradiation performed on the one side surface.
